# EUROPEAN PATENT APPLICATION

(11) **EP 4 760 082 A1**
(43) Date of publication of application: **17.06.2026**
(21) Application number: 25217849.6
(22) Date of filing: 21.11.2025
(51) Int. Cl.: F02C 7/32

(54) **GAS TURBINE ENGINE ACCESSORY GEARBOX DETACHMENT SYSTEM**

(30) Priority: 11.12.2024 IN 202411097897; 23.01.2025 US 202519034790
(71) Applicant: Honeywell International Inc., Charlotte, NC 28202 (US)
(72) Inventor: PATIL, Kiran, Charlotte, 28202 (US)
(74) Representative: Ingrassia, Fisher & Lorenz UK Ltd.

(57) **Abstract**

An accessory gearbox detachment system includes a vibration sensor, a shape memory alloy (SMA) actuator, and a processing system. The vibration sensor is mounted on an accessory gearbox and senses vibration levels of the accessory gearbox and supplies sensor signals indicative thereof. The SMA actuator is mounted within the accessory gear box and is configured, upon receipt of an activation signal, to move from an engage position to a disengage position. The processing system is in operable communication with the at least one SMA actuator and the vibration sensor. The processing system is configured to receive and process the sensor signals to determine a vibration level of the accessory gearbox, compare the vibration level to one or more predetermined threshold values, and supply the activation signal to the at least one SMA actuator when the determined vibration level exceeds the one or more predetermined threshold values.

## Description

### CROSS REFERENCE TO RELATED APPLICATION

This application claims priority to India Provisional Patent Application No. 202411097897 , filed December 11, 2024, the entire content of which is incorporated by reference herein.

### TECHNICAL FIELD

The present disclosure relates to gas turbine engine accessory gearboxes, and more particularly to a gas turbine engine accessory gearbox detachment system.

### BACKGROUND

A gas turbine engine may be used to supply power to various types of vehicles and systems. For example, gas turbine engines may be used to supply propulsion power to an aircraft. Many gas turbine engines include at least three major sections, a compressor section, a combustor section, and a turbine section. The compressor section receives a flow of intake air and raises the pressure of this air to a relatively high level. In a multi-spool (e.g., multi-shaft) engine, the compressor section may include two or more compressors. The compressed air from the compressor section then enters the combustor section, where a ring of fuel nozzles injects a steady stream of fuel. The injected fuel is ignited by a burner, which significantly increases the energy of the compressed air.

The high-energy compressed air from the combustor section then flows into and through the turbine section, causing rotationally mounted turbine blades to rotate and generate energy. The air exiting the turbine section is then exhausted from the engine. Similar to the compressor section, in a multi-spool engine the turbine section may include a plurality of turbines. The energy generated in each of the turbines may be used to drive various support components. These support components may include, for example, a fuel pump, an oil pump, an air driven starter, an air/oil separator, oil/fuel filters, and an electrical generator, just to name a few. These support components typically operate at different speeds from one another and require differing amounts of horsepower. As such, an accessory gear box may be mounted on or within the gas turbine engine to supply the appropriate horsepower to these support components.

During certain unlikely, yet postulated events, such as a fan blade-out, a sustained engine imbalance(SEI), or a bird strikes, the support components can supply relatively heavy vibrations, which can cause engine imbalance and potential damage. Thus, many accessory gearboxes include mechanical detach mechanisms to detach the support components from the accessory gearbox to thereby mitigate this risk. However, these current detach mechanisms are configured to detach at fixed vibration levels and thus lack the ability to adapt to varying vibration levels, which limits their effectiveness.

Hence, there is a need for system that can selectively detach the support components from the accessory gearbox at varying vibration levels. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an accessory gearbox detachment system includes a vibration sensor, at least one shape memory alloy (SMA) actuator, and a processing system. The vibration sensor is adapted to be mounted on an accessory gearbox and is configured to sense vibration levels of the accessory gearbox and supply sensor signals indicative thereof. The at least one SMA actuator is adapted to be mounted within the accessory gear box and is configured, upon receipt of an activation signal, to move from an engage position to a disengage position. The processing system is in operable communication with the at least one SMA actuator and the vibration sensor. The processing system is configured to receive and process the sensor signals to (i) determine a vibration level of the accessory gearbox, (ii) compare the vibration level to one or more predetermined threshold values, and (iii) supply the activation signal to the at least one SMA actuator when the determined vibration level exceeds the one or more predetermined threshold values. In the engage position, the at least one SMA actuator engages an accessory gearbox accessory and couples the accessory gearbox accessory to receive a drive torque from the accessory gearbox, and in the disengage position, the at least one SMA actuator disengages from the accessory gearbox accessory and detaches the accessory gearbox accessory from receiving the drive torque from the accessory gear box.

In another embodiment, a gas turbine engine system includes a gas turbine engine, an accessory gearbox, and an accessory gearbox detachment system. The gas turbine engine system is configured to at least generate a drive torque. The accessory gear box is coupled to the gas turbine engine and has at least one accessory gearbox accessory mounted therein. The accessory gearbox is configured to receive and transfer at least a portion of the drive torque generated by the gas turbine engine to at least one accessory gearbox accessory. The accessory gearbox detachment system includes a vibration sensor, at least one shape memory alloy (SMA) actuator, and a processing system. The vibration sensor is mounted on the accessory gearbox and is configured to sense vibration levels of the accessory gearbox and supply sensor signals indicative thereof. The at least one SMA actuator is mounted within the accessory gear box and is configured, upon receipt of an activation signal, to move from an engage position to a disengage position. The processing system is in operable communication with the at least one SMA actuator and the vibration sensor. The processing system is configured to receive and process the sensor signals to (i) determine a vibration level of the accessory gearbox, (ii) compare the vibration level to one or more predetermined threshold values, and (iii) supply the activation signal to the at least one SMA actuator when the determined vibration level exceeds the one or more predetermined threshold values. In the engage position, the at least one SMA actuator engages the at least one accessory gearbox accessory and couples the at least one accessory gearbox accessory to receive the at least a portion of the drive torque from the accessory gearbox, and in the disengage position, the at least one SMA actuator disengages from the at least one accessory gearbox accessory and detaches the accessory gearbox accessory from receiving the at least a portion of the drive torque from the accessory gear box.

In yet another embodiment, an accessory gearbox detachment system includes an accessory gearbox, a vibration sensor, a plurality of shape memory alloy (SMA) actuators, and a processing system. The accessory gearbox is coupled to a plurality of accessory gearbox accessories. The vibration sensor is mounted on the accessory gearbox and is configured to sense vibration levels of the accessory gearbox and supply sensor signals indicative thereof. The SMA actuators are mounted within the accessory gear box and each is associated with a different one of the accessory gearbox accessories. Each SMA actuator is configured, upon receipt of an activation signal, to move from an engage position to a disengage position. The processing system is in operable communication with the SMA actuators and the vibration sensor. The processing system is configured to receive and process the sensor signals to (i) determine a vibration level of the accessory gearbox, (ii) compare the vibration level to one or more predetermined threshold values, and (iii) supply the activation signal to the SMA actuators when the determined vibration level exceeds the one or more predetermined threshold values. In the engage position, each SMA actuator engages its associated accessory gearbox accessory and couples its associated accessory gearbox accessory to receive a drive torque from the accessory gearbox, and in the disengage position, each SMA actuator disengages from its associated accessory gearbox accessory and detaches its associated accessory gearbox accessory from receiving the drive torque from the accessory gear box.

Furthermore, other desirable features and characteristics of the accessory gearbox detachment system will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a simplified cross-sectional view of one embodiment of a gas turbine engine;
FIG. 2 depicts a functional block diagram of one embodiment of an accessory gearbox detachment system that may be included in the gas turbine engine of FIG. 1;
FIGS. 3 and 4 depict plan views of one embodiment of a shape memory alloy actuator, in an engage and disengage position, respectively, that may be used in the accessory gearbox detachment system of FIG. 2; and
FIG. 5 and 6 depict one particular configuration of a spring-loaded linear nitinol actuator that may be used to implement the SMA actuators depicted in FIGS. 2-4.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

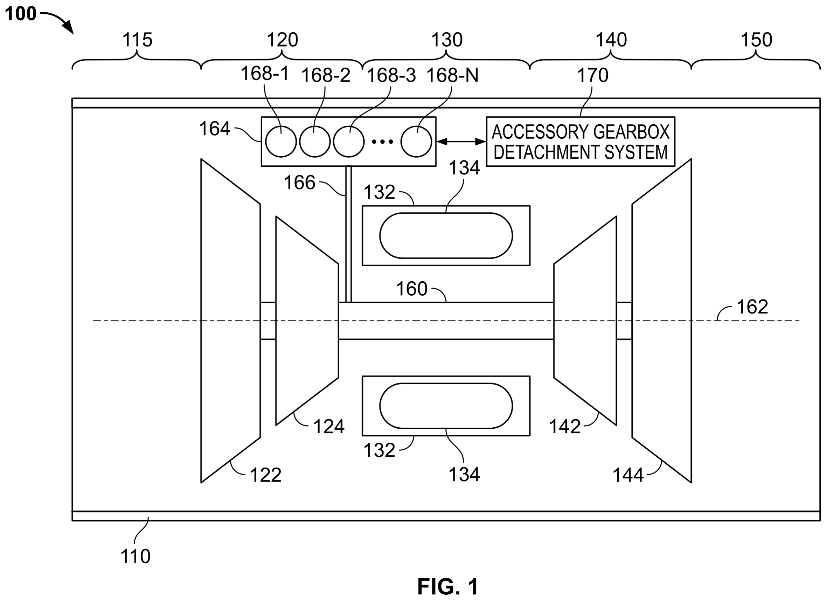

With reference to Fig. 1, a simplified cross-sectional view of one embodiment of a gas turbine engine 100 is depicted. The gas turbine engine 100, which is disposed in an engine housing 110, includes an intake section 115, a compressor section 120, a combustion section 130, a turbine section 140, and an exhaust section 150. The compressor section 120 and turbine section 140 are operably coupled to a shaft assembly 160 for rotation within the engine housing 110. A fluid (e.g., air) is drawn into the engine housing 110 through the intake section 115 and into the compressor section 120.

In the depicted embodiment, the compressor section 120 includes two compressors, a low-pressure compressor 122, and a high-pressure compressor 124. The low-pressure compressor 122 raises the pressure of the air directed into it from the intake section 115, and directs the compressed air into the high-pressure compressor 124. The high-pressure compressor 124 compresses the air still further, and directs the high pressure air into the combustion section 130.

The combustion section 130 includes a combustor air inlet 132 and a combustion chamber 134. The combustor air inlet 132 is in fluid communication with the downstream compressor 124, and it directs the compressed fluid into the combustion chamber 134. In the combustion chamber 134, the compressed fluid is mixed with fuel and is combusted in the combustion chamber 134. Hot exhaust fluids are then directed into the turbine section 140.

The hot exhaust fluids expand through, and rotate, the turbine section 140 prior to being exhausted through the exhaust section 150. The turbine section 140 rotates to drive equipment in the gas turbine engine 100 via rotors or spools concentrically disposed about an axis of rotation 162 within the shaft assembly 160. Specifically, the turbine section 140 may include one or more rotors 142, 144 driven by the expanding hot exhaust fluids to rotate the shaft assembly 160 and drive at least the compressors 122, 124.

The shaft assembly 160 also drives various support components. More specifically, and as FIG. 1 further depicts, the gas turbine engine also includes an accessory gearbox 164. In the depicted embodiment, the accessory gearbox 164 is coupled to the shaft assembly 160 via, for example, a gear driven tower shaft 166. The accessory gearbox 164 is in turn coupled to the various support components, which are referred to herein as accessory gearbox accessories 168 and that are mounted in the accessory gearbox 164. Thus, whenever the turbine section 140 rotates, it supplies a drive torque, via the accessory gearbox 164, to the accessory gearbox accessories 168. Although greater than three accessory gearbox accessories 168 (i.e., 168-1, 168-2, 168-3, . . .168-N) are depicted in FIG. 1, it will be appreciated that this number may vary. It will also be appreciated that the specific type of accessory gear box accessories 168 may vary.

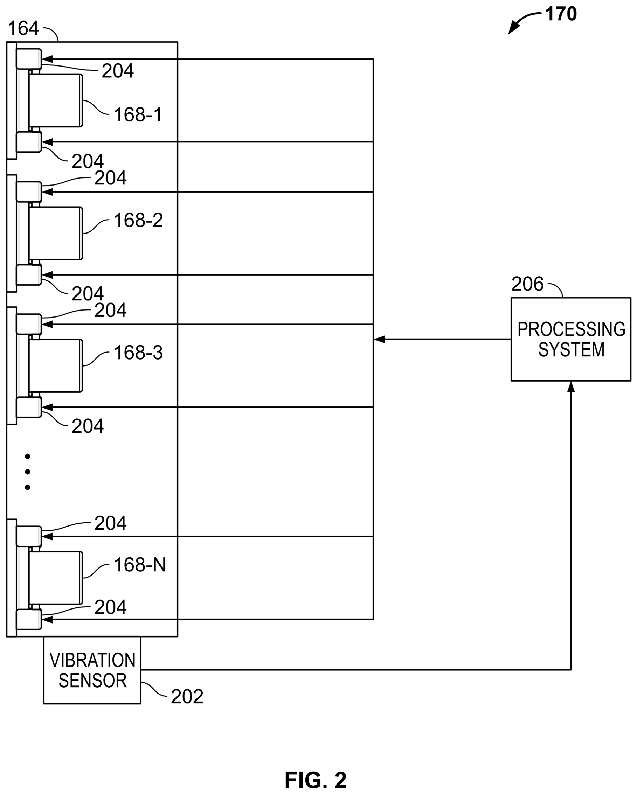

Regardless of the number and type of accessory gear box accessories 168, and as FIG. 1 further depicts, the gas turbine engine 100 additionally includes an accessory gearbox detachment system 170. The accessory gearbox detachment system 170 is configured to selectively detach one or more of the accessory gearbox accessories 168 from receiving the drive torque from the accessory gearbox 164. A functional block diagram of one embodiment of the accessory gearbox detachment system 170 is depicted in FIG. 2, and with reference thereto will now be described.

The accessory gearbox detachment system 170 includes a vibration sensor 202, a plurality of shape memory alloy (SMA) actuators 204, and a processing system 206. As FIG. 2 depicts, the vibration sensor 202 is mounted on the accessory gearbox 164. The vibration sensor 202 is configured to sense vibration levels of the accessory gearbox 164 and supply sensor signals indicative of the sensed vibration levels. It will be appreciated that the vibration sensor 202 may be implemented using any one of numerous types of vibration sensors now known or developed in the future. Some non-limiting examples of suitable vibration sensors 202 included piezoelectric vibration sensors, accelerometer vibration sensors, and eddy current vibration sensors, just to name a few. It will additionally be appreciated that the sensor signals supply by the vibration sensor 202 may be transmitted either by a wired or a wireless connection.

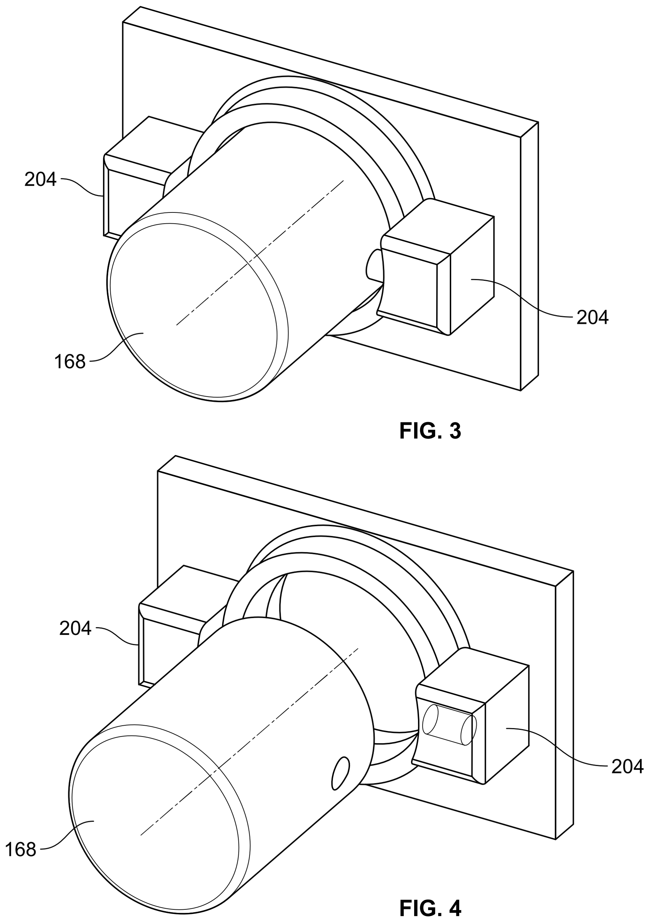

The SMA actuators 204 are mounted within the accessory gearbox 164 and at least one of the SMA actuators 204 is associated with a different one of the accessory gearbox accessories 168. In one embodiment, however, and as shown more clearly in FIG. 3, two SMA actuators 204 are associated with each of the accessory gearbox accessories 168 (only one accessory gearbox accessory 168 shown in FIG. 3). Regardless of the number of SMA actuators 204 that are associated with each accessory gearbox accessory 168, each SMA actuator 204 is configured, upon receipt of an activation signal, to move from an engage position, which is the position depicted in FIGS. 2 and 3, to a disengage position, which is the position depicted in FIG. 4.

As FIGS. 2 and 3 depict, in the engage position, each SMA actuator 204 engages its associated accessory gearbox accessory 168 and couples its associated accessory gearbox accessory 168 to receive the drive torque from the accessory gearbox 164. As FIG. 4 depicts, in the disengage position, each SMA actuator 204 disengages from its associated accessory gearbox accessory 168 and detaches its associated accessory gearbox accessory 168 from receiving the drive torque from the accessory gearbox 164.

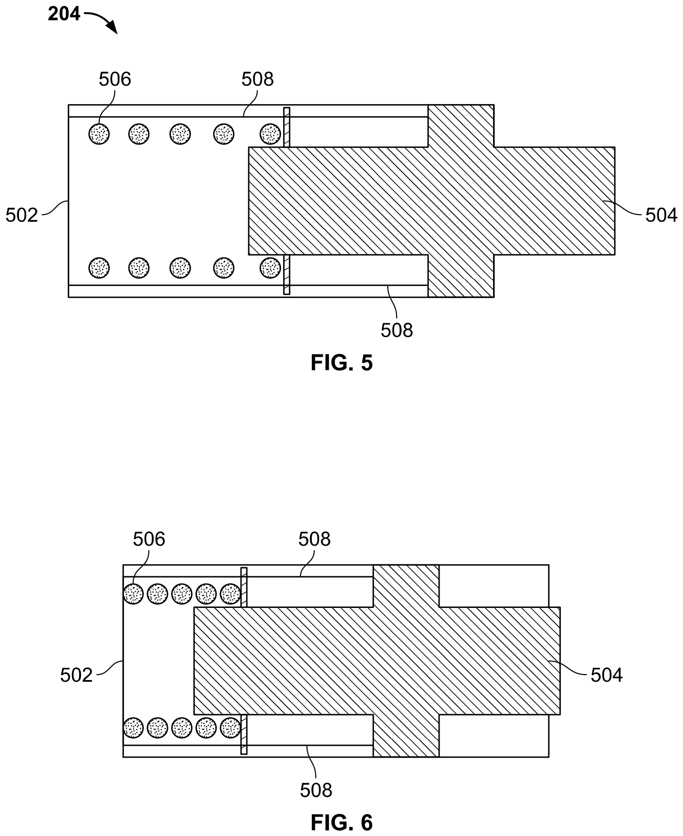

It will be appreciated that the SMA actuators 204 may be variously configured and implemented. In one particular embodiment, each SMA actuator 204 is implemented using a spring-loaded linear nitinol actuator. As may additionally be appreciated, the configuration of a spring-loaded linear nitinol actuator may also vary. One particular configuration of a spring-loaded linear nitinol actuator 204 is depicted in FIGS. 5 and 6 and will now be briefly described.

The depicted spring-loaded nitinol actuator 204 includes an actuator housing 502, an actuator pin 504, a spring 506, and nitinol wires 508. The actuator pin 504 is disposed in the actuator housing 502 and is movable between a first position, which is the position depicted in FIG. 5, and a second position, which is the position depicted in FIG. 6. As may be appreciated, the SMA actuator 204 is in the engage position at least when the actuator pin 504 is in the first position, and it is in the disengage position at least when the actuator pin 504 is in the second position.

The spring 506 is also disposed within the actuator housing 502 and engages the actuator pin 504. The spring 506 supplies a spring force to the actuator pin 504 that urges the actuator pin 504 toward the first position.

The nitinol wires 508, only two of which are shown, are also disposed within the actuator housing 502 and are coupled to the actuator pin 504. The nitinol wires 508 are coupled to receive the above-mentioned activation signal and are configured, upon receipt of the activation signal, to supply a force to the actuator pin 504 that moves the actuator pin 504, against the spring force, toward the second position. It will be appreciated that although nitinol wires 508 are used in the depicted embodiment, in other embodiments other types of SMA alloy wires could be used.

Returning now to FIG. 2, the processing system 206 is in operable communication, either via wired or wireless connections, with the vibration sensor 202 and with each of the SMA actuators 204. The processing system 206 may include one or more processors and computer-readable storage devices or media encoded with programming instructions for configuring the processing system 206. The one or more processors may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

With the above in mind, the processing system 206 is configured to receive and process the sensor signals to determine a vibration level of the accessory gearbox 164 and to compare the vibration level to one or more predetermined threshold values, which may be stored in the computer readable storage devices. The processing system 206 is additionally configured to supply the activation signal to one or more of the SMA actuators 204 when the determined vibration level exceeds one or more of the predetermined threshold values. As may be appreciated, in most embodiments, there is a predetermined threshold value associated with each accessory gearbox accessory 168. Thus, individual accessory gearbox accessories 168 may be detached from the accessory gearbox 164 at different vibration levels.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An accessory gearbox detachment system, comprising:
a vibration sensor adapted to be mounted on an accessory gearbox, the vibration sensor configured to sense vibration levels of the accessory gearbox and supply sensor signals indicative thereof;
at least one shape memory alloy (SMA) actuator adapted to be mounted within the accessory gear box and configured, upon receipt of an activation signal, to move from an engage position to a disengage position; and
a processing system in operable communication with the at least one SMA actuator and the vibration sensor, the processing system configured to receive and process the sensor signals to (i) determine a vibration level of the accessory gearbox, (ii) compare the vibration level to one or more predetermined threshold values, and (iii) supply the activation signal to the at least one SMA actuator when the determined vibration level exceeds the one or more predetermined threshold values,
wherein:
in the engage position, the at least one SMA actuator engages an accessory gearbox accessory and couples the accessory gearbox accessory to receive a drive torque from the accessory gearbox, and
in the disengage position, the at least one SMA actuator disengages from the accessory gearbox accessory and detaches the accessory gearbox accessory from receiving the drive torque from the accessory gear box.

2. The system of claim 1, wherein:
the accessory gearbox is configured to be coupled to a plurality of accessory gearbox accessories;
the system includes a plurality of SMA actuators; and
at least one of the SMA actuators is associated with a different one of the accessory gearbox accessories.

3. The system of claim 2, wherein two SMA actuators are associated with each of the accessory gearbox accessories.

4. The system of claim 2, wherein there is a predetermined threshold value associated with each accessory gearbox accessory.

5. The system of claim 1, wherein the at least one SMA actuator comprises a spring-loaded linear nitinol actuator.

6. The system of claim 5, wherein the spring-loaded nitinol actuator comprises:
an actuator housing;
an actuator pin disposed in the actuator housing and movable between a first position and a second position;
a spring disposed within the actuator housing and engaging the actuator pin, the spring supplying a spring force to the actuator pin that urges the actuator pin toward the first position; and
one or more nitinol wires disposed within the actuator housing and coupled to the actuator pin, the one or more nitinol wires coupled to receive the activation signal and configured, upon receipt of the activation signal, to supply a force to the actuator pin that moves the actuator pin, against the spring force, toward the second position.

7. The system of claim 6, wherein:
the SMA actuator is in the engage position at least when the actuator pin is in the first position; and
the SMA actuator is in the disengage position at least when the actuator pin is in the second position.
